(19) Europäisches Patentamt

European Patent Office

Office européen des brevets

(11) Veröffentlichungsnummer: **0 535 494 A2**

## (12) EUROPÄISCHE PATENTANMELDUNG

(21) Anmeldenummer: **92116105.5**

(22) Anmeldetag: **21.09.92**

(51) Int. Cl.5: **H04L 27/22**

(30) Priorität: **01.10.91 DE 4132706**

(43) Veröffentlichungstag der Anmeldung:
**07.04.93 Patentblatt 93/14**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Noé, Reinhard, Dr.**
**Sulzbacher Strasse 6**
**W-8000 München 40(DE)**

(54) **Optischer Homodynempfänger für PSK-Signale.**

㊐ Bei einem Homodynempfänger mit Phasenregelschleife soll sichergestellt sein, daß bei eingerasteter Phasenregelschleife das arithmetische Mittel der Signalgröße des Überlagerungssignals immer im wesentlichen im arithmetischen Mittel einer Signalgröße eines Datenausgangssignals entspricht. Dazu ist neben der Phasenregelschleife (3) eine Rückkopplungsschleife (4) zur Erzeugung einer quantisierten Rückkopplung des vom Empfänger erzeugten Überlagerungssignals (ÜS) vorgesehen, wobei das in der Rückkopplungsschleife (4) quantisiert rückgekoppelte Überlagerungssignal (qÜS) dem in der Phasenregelschleife (3) rückgeführten Überlagerungssignal (pÜS) überlagert ist.

FIG 1

Die Erfindung betrifft einen Homodynempfänger zum Empfang PSK-modulierter Datensignale nach dem Oberbegriff des Patentanspruchs 1.

Beim Homodynempfang von Trägerfrequenzsignalen wird ein Nachrichtensignal durch eine Phasenregelschleife in das Basisband konvertiert. Von besonderem Interesse sind neuerdings optische Homodynsysteme mit digitaler Phasenmodulation (PSK) (siehe G. Fischer et al "PSK optical homodyne systems operation near quantum limit" Tagung ECOC 1989, Göteborg, Band 3, PDA-2, S. 9-12).

Aus IEEE Journ. of Lightwave Technology, LT-4 (1986)2, S. 182-193 ist ein optischer Homodynempfänger mit einer linearen optischen Phasenregelschleife (OPLL) mit Restträgersynchronisation bekannt. Bei diesem Homodynempfänger wird das optische Signal zur Übertragung logischer Binärwerte (logische 1 und logische 0) in der Phase um einen Phasenwinkel +a oder -a umgetastet, wobei der Betrag |a| des Phasenwinkels weniger als 90°, beispielsweise 75° beträgt. Bei gleicher Häufigkeitsverteilung der logischen 1 und logischen 0 rastet die OPLL auf dem vorhandenen Restträger mit einem Phasenwinkel b = 0° und einer Amplitude s.sin(a) ein. Dies hat eine Empfindlichkeitseinbuße von $10.\log(\sin^2(a))$dB zur Folge.

Um geringe Phasenfehler zu erreichen und relativ hohe Linienbreiten der das Nachrichtensignal erzeugenden Laser zulassen zu können, sollte die Bandbreite der OPLL möglichst hoch sein. Die OPLL sollte deshalb das arithmetische Mittel der Spannung am Ausgang des als Phasendetektor wirkenden optoelektrischen Wandlers des Homodynempfängers relativ schnell zu null machen.

Bei ungleicher Häufigkeitsverteilung der logischen 1 und logischen 0 - eine solche ist bereits während längerer Folgen von 1 oder 0, beispielsweise von 10 bis 20 1 oder 10 bis 20 0 gegeben und tritt bei jeder digitalen Zufallsfolge auf - rastet die OPLL auf einen Winkel b ungleich 0 ein, wobei -a < b < +a gilt. Dadurch werden die Basisbandsignale von ± sin(a) auf sin(a-b) bzw. sin(-b-a) verkleinert und der Empfindlichkeitsverlust wird gleich

$$10\log((\sin(a-b)-\sin(-b-a))^2/4)dB$$

Ein anderes bei optischen Homodynempfängern angewendetes Verfahren ist die entscheidungsgesteuerte OPLL mit Costas-Schleife (siehe IEEE Journ. of lightwave Technology, LT-3 (1985)6, S. 1238-1247). Das Signal wird um ± 90° moduliert, so daß keine Leistung an einen Restträger verschenkt wird. Allerdings muß der Empfänger ein 90°-Hybrid aufweisen, das besonders im optischen Bereich schwierig zu realisieren ist. Außerdem wird ein Teil der Signalleistung an einen für die Datenrückgewinnung ungenutzten Quadraturzweig verschenkt, der bei verlustfreiem Hybrid und bei gebräuchlicher Auslegung des Hybrids die Hälfte dieser Signalleistung beträgt.

Der im Anspruch 1 angegebenen Erfindung liegt die Aufgabe zugrunde, einen Homodynempfänger der eingangs genannten Art mit Phasenregelschleife anzugeben, bei dem sichergestellt ist, daß bei eingerasteter Phasenregelschleife das arithmetische Mittel der Signalgröße des Überlagerungssignals immer im wesentlichen dem arithmetischen Mittel einer Signalgröße eines Datenausgangssignals entspricht.

Bevorzugte und vorteilhafte Ausgestaltungen der Erfindung gehen aus den Unteransprüchen hervor.

Die Erfindung wird in der nachfolgenden Beschreibung anhand der Figuren beispielhaft näher erläutert. Es zeigen:

Figur 1
ein Ausführungsbeispiel des erfindungsgemäßen Homodynempfängers,

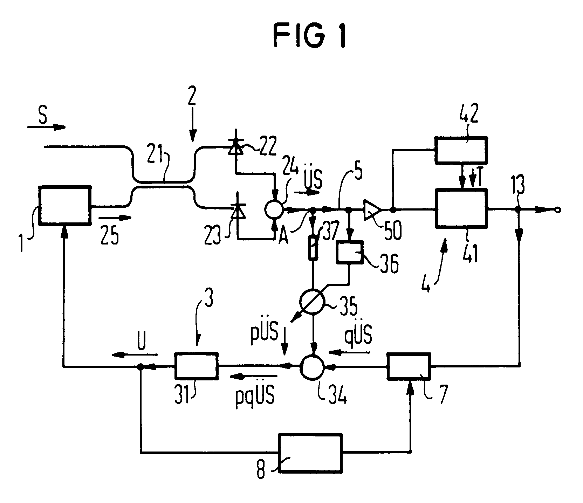

Figur 2
eine Modifikation des Beispiels nach Figur 1,

Figur 3
ein Ausführungsbeispiel einer Entscheidungseinrichtung mit adaptiver quantisierter Rückkopplung,

Figur 4a und Figur 4b
Zeitdiagramme, die ein Eingangssignal und Ausgangssignal einer Entscheidungseinrichtung ohne adaptive quantisierte Rückkopplung zeigen, und

Figur 5a und Figur 5b
Zeitdiagramme, die ein Eingangssignal und Ausgangssignal einer Entscheidungseinrichtung mit adaptiver quantisierter Rückkopplung zeigen.

Bei dem beispielhaften optischen Homodynempfänger nach Figur 1 werden die zugeführten PSK-modulierten optischen Datensignale S in einer Signalüberlagerungseinrichtung 2 mit einem von einem Lokaloszillator 1 erzeugten optischen Lokaloszillatorsignal LS zu einem Überlagerungssignal ÜS überlagert. Die Signalüberlagerungseinrichtung 2 weist einen optischen Koppler 21, vorzugsweise mit einem Koppelverhältnis von 1:1 auf. Einem Eingangstor dieses Kopplers 21 ist das Datensignal S und einem anderen Eingangstor das Lokaloszillatorsignal LS zugeführt. Der Koppler 21 weist zwei Ausgangstore auf, wobei an jedem dieser Ausgangstore ein Anteil des optischen Überlagerungssignal ÜS verfügbar ist, der einem optoelektrischen Wandler 22 bzw. 23, beispielsweise eine Photodiode, zur Umwandlung in ein entsprechendes elektrisches Signal zugeführt ist.

Die elektrischen Ausgangssignale der optoelektrischen Wandler 22 und 23 werden in einem Mischer oder Addierer 24 zum elektrischen Überlagerungssignal ÜS kombiniert, dessen Spannung von der Phasenwinkeldifferenz zwischen dem Datensignal S und dem Lokaloszillatorsignal LS abhängt, beispielsweise so, daß diese Spannung proportional zum Sinus dieser Phasenwinkeldifferenz ist.

Dieses Überlagerungssignal ÜS wird einerseits einem Schleifenfilter 31 einer Phasenregelschleife 3 zugeführt, dessen Ausgangsspannung U die Frequenz des Lokaloszillators 1 verändert, so daß die Phasenwinkeldifferenz stationär gleich null wird und die Schwingung des Lokaloszillators 1 phasenstarr an das Datensignal S angebunden ist. Das in der Phasenregelschleife 3 rückgeführte Überlagerungssignal ist in der Figur 1 mit pÜS bezeichnet.

Das Überlagerungssignal ÜS wird andererseits auch einer Rückkopplungsschleife 4 zur Erzeugung einer quantisierten Rückkopplung des Überlagerungssignals ÜS zugeführt, wobei das in der Rückkopplungsschleife 4 quantisierte rückgekoppelte Überlagerungssignal qÜS dem in der Phasenregelschleife 3 rückgeführten Überlagerungssignal pÜS überlagert wird. Durch die quantisierte Rückkopplung wird sichergestellt, daß bei eingerasteter Phasenregelschleife 3 das arithmetische Mittel an dem Abzweigpunkt A, an dem die Phasenregelschleife 3 von einem Hauptsignalpfad 5 für das Überlagerungssignal ÜS abzweigt, immer dem arithmetischen Mittel der Spannung an einem Datenausgang B entspricht. Da Bitfehler sehr selten sind und die Laufzeit vom Abzweigpunkt A zum Datenausgang B relativ gering ist, ist dies der optimale Fall.

In der Phasenregelschleife 3 ist zwischen dem Abzweigpunkt A und einer Vereinigungsstelle 34 der Phasenregelschleife 3 und der Rückkopplungsschleife zur Erzeugung der quantisierten Rückkopplung eine Dämpfungseinrichtung 35 zum Dämpfen des Signalpegels des in dieser Schleife 3 rückgeführten Überlagerungssignals pÜS angeordnet. Diese Dämpfungseinrichtung 35 dämpfe um einen Faktor q. Wenn eine logische 1 übertragen wird, ist das Überlagerungssignal ÜS am Abzweigpunkt A gleich s.sin(a). Das Signal an der Vereinigungsstelle 34 ist gleich (s/q).sin(a). Mit Ausnahme des seltenen Falles eines Entscheidungsfehlers wird das Überlagerungssignal ÜS nach Verstärkung in einen Verstärker 50 am Datenausgang B einer Entscheidungseinrichtung 41 der Rückkopplungsschleife 4 zur Erzeugung der quantisierten Rückkopplung gleich sin(a). Das in der Phasenregelschleife rückgeführte und mit dem quantisiert rückgekoppelten Überlagerungssignal qÜS überlagerte Überlagerungssignal pqÜS ist am Eingang des Schleifenfilters 31, dem es zugeführt ist, ist durch (s/q).sin(a-b)-sin(a) gegeben. Für s = 9 ist dieses Signal pqÜS proportional zu sin(-b) und da b klein ist, proportional zu -b. Dasselbe Ergebnis wird für eine gesendete logische Null erhalten. Durch das in der Rückkopplungsschleife 4 rückgekoppelte Überlagerungssignal qÜS aus der Entscheidungseinrichtung 41 wird die Phasenregelschleife 3 unabhängig vom Bitmuster, insbesondere von längeren Folgen des gleichen Symbols. Selbst stationär ungleiche Häufigkeitsverteilungen von logischen 1 und logischen 0 sind möglich, falls der Hauptsignalpfad, in welchem der Verstärker 50 und die Entscheidungseinrichtung 41 angeordnet sind, gleichstromgekoppelt ist oder durch quantisierte Rückkopplung dafür ausgelegt ist.

Der Verstärker 50 und die Entscheidungseinrichtung 41 verzögern das im Hauptsignalpfad 5 geführte Überlagerungsignal ÜS um einen gewissen Betrag. D.h. daß bei einer langen Folge gleiche Symbole - logische 1 oder logische 0 - das in der Rückkopplungsschleife 4 rückgekoppelte Signal qÜS erst mit der gewissen Verzögerung an der Vereinigungsstelle 34 ankommt und die Phasenregelschleife 3 vorübergehend aus dem Gleichgewicht gebracht wird, was zur Folge hat, daß b ungleich 0 ist. Dies kann umgangen werden, wenn in der Phasenregelschleife 3 zwischen dem Abzweigpunkt A und der Vereinigungsstelle 34 eine Verzögerungseinrichtung 37 angeordnet wird, die zusammen mit der Dämpfungseinrichtung 35 um die gleiche Zeit verzögern, wie der Signalpfad vom Abzweigpunkt A über die Entscheidungseinrichtung 41 zurück zur Vereinigungsstelle 34.

Da die Verzögerung des Verstärkers 50 und der Entscheidungseinrichtung 41 typischerweise nur einige Bitdauern ist, wird die relativ langsame Phasenregelschleife 3 durch die Verzögerungseinrichtung 37 nicht wesentlich beeinträchtigt.

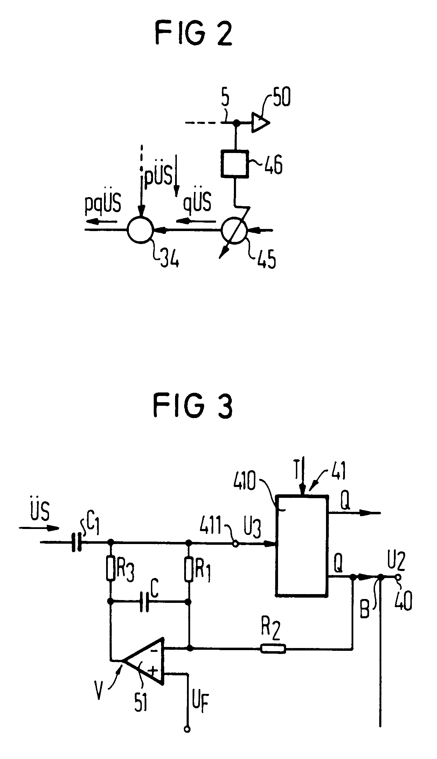

Anstelle der Dämpfungseinrichtung 35, die in der Phasenregelschleife 3 zwischen dem Abzweigpunkt A und der Vereinigungsstelle 34 angeordnet ist, könnte auch in der Regelschleife 4 zwischen dem Punkt B und der Vereinigungsstelle 34 eine Verstärkungseinrichtung 45 angeordnet sein, so wie es in der Figur 2 dargestellt ist.

Gegebenenfalls muß die Verzögerungseinrichtung 37 in der Regelschleife 4 zwischen dem Punkt B und der Vereinigungsstelle 34 angeordnet werden, es kommt nur darauf an, daß die Signallaufzeit in der Phasenregelschleife 3 zwischen dem Abzweigpunkt A und der Vereinigungsstelle 34 gleich der Signallaufzeit von dem Abzweigpunkt A über den Punkt B zurück zur Vereinigungsstelle 34 ist.

Beim ersten Einrasten der Phasenregelschleife 3 könnte es zu Schwierigkeiten kommen, weil die Entscheidungseinrichtung 41 noch keine korrekten Entscheidungen trifft und das rückgeführte Signal qÜS aus diesem Grunde nicht hilft, sondern stört. Abhilfe kann mit einer Schaltereinrichtung 7 geschaffen werden, die in der Rückkopplungsschleife 4 zwischen dem Punkt B und der Vereinigungsstelle 34 angeordnet ist und die den Signalpfad zwischen B und der Vereinigungsstelle 34 erst dann schließt, wenn die Phasenregelschleife 3 eingerastet ist. Diese Schaltereinrichtung 7 kann von einem Einrastdetektor gesteuert sein, der ein Einrasten der Phasenregelschleife 3 überwacht und die Schaltereinrichtung 7 zur Herstellung der Rückkopplungsschleife 4 zur Erzeugung der quantisierten Rückkopplung erst schließt, wenn das Einrasten der Phasenregelschleife 3 detektiert ist. Der Einrastdetektor 8 kann das Einrasten beispielsweise vom Verhalten der Ausgangsspannung U des Schleifenfilters 31 erkennen. Wenn die Spannung U einen großen Betrag hat oder stark oszilliert, ist die Phasenregelschleife 3 nicht eingerastet. Wenn der Betrag der Spannung U nicht allzu groß ist und sich nur relativ langsam und wenig ändert, ist die Phasenregelschleife 3 eingerastet.

Wenn s nicht, wie beim obigen Fall, gleich sondern ungleich q ist, wird der gewünschte Effekt nicht erreicht. Es läßt sich aber trotzdem die geforderte Empfangsgüte erzielen, sofern die Signalleistung ein Minimum nicht unterschreitet. In diesem Fall wird q auf einen Wert $s_0$ eingestellt, der den minimalen für zufriedenstellenden Empfang erforderlichen Empfangssignal entspricht, beispielsweise auf einen Wert, bei dem die Bitfehlerrate gleich $10^{-9}$ ist. Wenn s größer als $s_0$ ist, wird das Ziel b = 0 zwar nicht erreicht, aber es ist sichergestellt, daß die Bitfehlerrate trotzdem kleiner ist als für s = $s_0$. Die Bitfehlerrate wird für steigendes s kleiner aber nicht so schnell wie es für q = s der Fall wäre. Für s < $s_0$ wird die Bitfehlerrate schnell größer, was von untergeordneter Bedeutung sein könnte, da sie auch bei optimaler Einstellung q = s schon zu hoch wäre.

Falls erwünscht läßt sich trotzdem für jedes beliebige s die optimal niedrigste Bitfehlerrate erzielen. Dazu wird q = s durch eine regelbare Dämpfungseinrichtung 35 oder regelbare Verstärkungseinrichtung 45 gemacht. Durch einen Pegelmesser 36 im Fall der Dämpfungseinrichtung 35 oder durch einen Pegelmesser im Fall der Verstärkungseinrichtung 45 wird s bestimmt und mit dieser Information wird die Dämpfungseinrichtung 36 oder Verstärkungseinrichtung 46 so geregelt, daß q = s wird. In den Figuren 1 und 2 bestimmt der Pegelmesser 36 bzw. 46 s an dem im Hauptsignalpfad 5 übertragenen Überlagerungssignal ÜS (Vorwärtssteuerung). Es könnte auch der Pegel des Signals pÜS zwischen der Dämpfungseinrichtung 35 und der Vereinigungsstelle 34 oder der Pegel des Signals qpÜS zwischen der Verstärkungseinrichtung 46 und der Vereinigungsstelle 34 zur Bestimmung von s gemessen werden (Rückwärtsregelung). Durch die regelbare Dämpfungseinrichtung 35 und 36 oder die regelbare Verstärkungseinrichtung 45 und 46 ist eine Regelung der Schleifenverstärkung realisiert, die ohnehin notwendig sein dürfte, um die Funktion der Phasenregelschleife 3 über einen weiten Eingangspegelbereich herzustellen.

Die Vereinigungsstelle 34 ist zweckmäßigerweise durch eine Überlagerungseinrichtung zur Überlagerung des in der Phasenregelschleife 3 rückgeführten Überlagerungssignals pÜS und des quantisiert rückgekoppelten Überlagerungssignals qÜS definiert. Beispielsweise kann die Überlagerungseinrichtung ein Mischer oder Addierer sein.

Die Entscheidungseinrichtung 41 ist mit einem Takt T getaktet, der aus dem im Hauptsignalpfad 5 geführten Überlagerungssignal ÜS durch eine Taktrückgewinnungsschaltung 42 gewonnen ist.

Durch die Erfindung kann die Phasenregelschleife 3 eines insbesondere optischen Homodynempfängers auch längere oder sehr lange Folgen des gleichen Symbols oder eine stationär ungleiche Verteilung von logischen 1 und logischen 0 ohne Phasenfehler verarbeiten. Die einzige Begrenzung besteht durch den in der Regel wechselstromgekoppelten Hauptsignalpfad, in welchem der Verstärker 50 und die Entscheidungseinrichtung 41 angeordnet sind.

Eine Verbesserung wird durch die in Figur 3 dargestellte Entscheidungseinrichtung mit adaptiver quantisierter Rückkopplung gewonnen, mit der vor der Entscheidungseinrichtung der Gleichanteil des wechselstromgekoppelten Eingangssignals ergänzt werden kann (siehe dazu H. Röder, J. Fahrendholz "Ein neues Verfahren der quantisierten Rückkopplung bei der Regenerierung von Digitalsignalen", Frequenz 37 (1983)3, S. 54-58).

Die Entscheidungseinrichtung 41 nach Figur 3 weist ein D-Flipflop 410 als Entscheider auf wobei einem Eingang 411 des Flipflops 410 das Überlagerungssignal ÜS über einen Kondensator $C_1$ zugeführt ist. Die Ausgänge des Flipflops 410 sind mit Q und $\overline{Q}$ bezeichnet. Die adaptive quantisierte Rückkopplung wird über einen Widerstand $R_2$ durch eine Verstärkungseinrichtung V bewirkt.

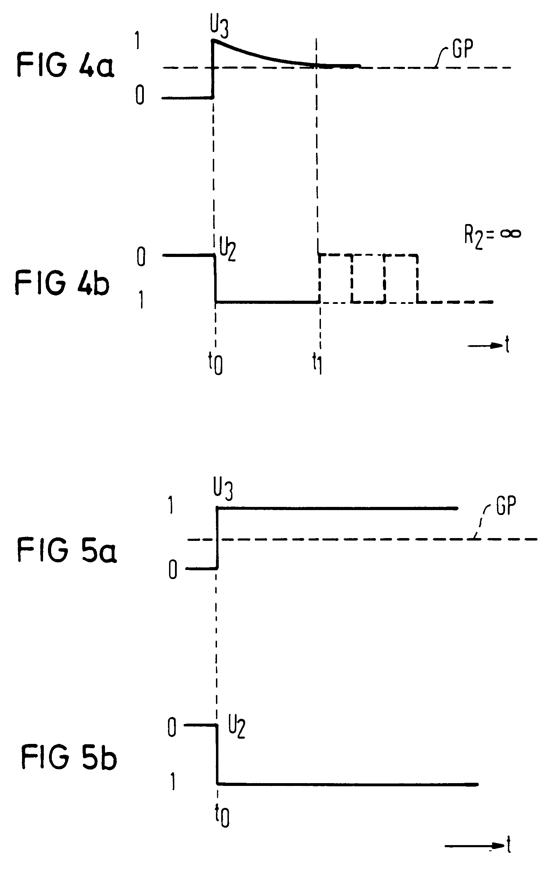

Es sei zunächst der Fall betrachtet, daß keine quantisierte Rückkopplung über den Widerstand $R_2$ vorhanden ist. Der Gleichspannungspegel GP, auf den das Signal am Eingang 411 des Flipflops 410 bezogen ist, sei fest und so eingestellt, wie in der Figur 4a gezeigt. In der Figur 4a ist als Beispiel ein Übergang von einer logischen 0 zu einer langen Folgen von logischen 1 dargestellt. Wegen der Wechselstromkopplung über den Kondensator $C_1$ oder dem vorausgehenden Verstärker 50 fällt das Signal am Eingang 411 schnell in die Nähe der durch den Gleichspannungspegel GP vorgegebenen Schwelle ab. Beispielsweise ist das Signal, das zum Zeitpunkt $t_0$ von der logischen 0 in die lange Folge von 1 übergegangen ist, zum Zeitpunkt $t_1$ soweit abgefallen daß ab diesem Zeitpunkt $t_1$ Entscheidungsfehler die Folge sind, die in der Figur 4b gestrichelt angedeutet sind.

Anders steht es, wenn die quantisierte Rückkopplung über dem Widerstand $R_2$ vorgesehen ist. Die mittlere Gleichspannung $U_3$ am Eingang 411 wird durch den gegengekoppelten Operationsverstärker 41 eingestellt, wobei gilt: $(U_3-U_x)/R_1 = (U_x-U_2)/R_2$. Durch die Kapazität C wird, falls nötig, die Bandbreite des Operationsverstärkers 51 begrenzt. Dadurch wird folgendes erreicht: Je öfter die Symbole für logische 1 sind, desto negativer wird der Mittelwert der Ausgangsspannung $U_2$ und desto positiver wird die Spannung $U_3$. Deshalb wird der Gleichanteil des Dateneingangssignals in Form des Überlagerungssignals ÜS automatisch ergänzt. Um Entscheidungsfehler bzw. ein Selbstblockieren beim Einschalten oder Einrasten zu vermeiden, wird die quantisierte Rückkopplung vorzugsweise kleiner als der optimale Wert gewählt, d.h. der WErt $R_2$ vergrößert.

Die Figuren 5a und 5b zeigen in einer entsprechenden Darstellung, wie bei den Figuren 4a und 4b den zeitlichen Verlauf des Eingangsignals $U_3$ bzw. das Ausgangssignal $U_2$, das auch an einem Datenausgang 40 als Datenausgangssignal zur Weiterverarbeitung verfügbar ist. In der Figur 3 bezeichnen $R_1$ und $R_3$ ähnlich wie $R_2$ jeweils einen Widerstand.

Bei der Erfindung wird durch die quantisierte Rückkopplung in der Phasenregelschleife 3 der Phasenfehler eliminiert, der sonst durch verschieden häufiges Auftreten von logischen 1 und logischen 0 entstünde.

Wenn ein Symbol nicht nur kurzzeitig, sondern stationär eine von 50% unterschiedliche Wahrscheinlichkeit hat, verschiebt sich die Entscheiderschwelle, so daß die Bitfehler häufiger werden. IM Extremfall gibt es Phasenfehler in der Phasenregelschleife, weil an der Vereinigungsstelle 34 falsche Signale auftreten. Für stationär ungleiche Häufigkeiten von logischen 1 und logischen 0 ist es daher zweckmäßig, auch die Entscheidungseinrichtung 41 durch eine quantisierte Rückkopplung zu ergänzen. Der erfindungsgemäße Homodynempfänger weist dann zwei ineinandergeschachtelte quantisierte Rückkopplungen auf.

**Patentansprüche**

1. Homodynempfänger zum Empfang PSK-modulierter Datensignale (S), mit
   - einem Lokaloszillator (1) zur Erzeugung eines Lokaloszillatorsignals (LS),
   - einer Signalüberlagerungseinrichtung (2) zur Überlagerung eines Datensignals (S) mit dem Lokaloszillatorsignal (LS) und Erzeugen eines Überlagerungssignals (ÜS) mit einer von einer Phasenwinkeldifferenz zwischen dem Datensignal (S) und dem Lokaloszillatorsignal (LS) abhängigen Signalgröße, und
   - einer Phasenregelschleife (3), durch eine welche eine Frequenz des Lokaloszillators (1) in Abhängigkeit von der Signalgröße des Überlagerungssignals (ÜS) derart gesteuert ist, daß das Lokaloszillatorsignal (LS) phasenstarr an das Datensignal (S) gebunden ist,
   **dadurch gekennzeichnet,**
   daß überdies eine Rückkopplungsschleife (4) zur Erzeugung einer quantisierten Rückkopplung des Überlagerungssignals (ÜS) vorgesehen ist, wobei das in der Rückkopplungsschleife (4) quantisiert rückgekoppelte Überlagerungssignal (qÜS) dem in der Phasenregelschleife (3) rückgeführten Überlagerungssignal (pÜS) überlagert ist.

2. Empfänger nach Anspruch 1, **dadurch gekennzeichnet,** daß die Signallaufzeit des in der Phasenregelschleife (3) von einem Abzweigpunkt (A), an dem die Phasenregelschleife (3) von einem Hauptsignalpfad (5) für das Überlagerungssignal (ÜS) abzweigt, bis zu einer Vereinigungsstelle (34) der Phasenregelschleife (3) und der Rückkopplungssschleife (4) zur Erzeugung der quantisierten Rückkopplung rückgeführten Überlagerungssignals (pÜS) gleich der Signallaufzeit des Überlagerungssignals ist, das ausgehend vom Abzweigpunkt (A) in der Rückkopplungsschleife (4) der Vereinigungsstelle (34) als quantisiert rückgekoppeltes Überlagerungssignal (qÜS) zurückgeführt ist.

3. Empfänger nach Anspruch 2, **dadurch gekennzeichnet,** daß die Vereinigungsstelle (34) durch eine Überlagerungseinrichtung zur Überlagerung des in der Phasenregelschleife (3) rückgeführten Überlagerungssignals (pÜS) und des quantisiert rückgekoppelten Überlagerungssignals (qÜS) definiert ist.

4. Empfänger nach einem der vorhergehenden Ansprüche,
   **dadurch gekennzeichnet,** daß in der Phasenregelschleife (3) in einem Abschnitt (zwischen A und 34), in dem das mit dem quantisiert rückgekoppelten Überlagerungssignal (qÜS) zu überlagernde Überlagerungssignal (pÜS) rückgeführt ist, eine Dämpfungseinrichtung (35) zum Dämpfen des Signalpegels dieses Überlagerungssignals (pÜS) angeordnet ist.

5. Empfänger nach Anspruch 4, **dadurch gekennzeichnet,** daß die Dämpfungseinrichtung (35) den Signalpegel des in der Phasenregelschleife (3) rückgeführten Überlagerungssignals (pÜS) in Abhängigkeit von einem gemessenen Signalpegel eines Überlagerungssignals (ÜS) dämpft.

6. Empfänger nach einem der vorhergehenden Ansprüche,
   **dadurch gekennzeichnet**, daß in der Rückkopplungsschleife (4) zur Erzeugung der quantisierten Rückkopplung in einem Abschnitt (zwischen 41 und 34), in dem das mit dem in der Phasenregelschleife (3) rückgeführten Überlagerungssignal (pÜS) zu überlagernde quantisiert rückgekoppelte Überlagerungssignal (qÜS) rückgeführt ist, eine Verstärkungseinrichtung (45) zum Verstärken des Signalpegels des quantisiert rückgekoppelten Überlagerungssignals (qÜS) angeordnet ist.

7. Empfänger nach Anspruch 6, **dadurch gekennzeichnet**, daß die Verstärkungseinrichtung (45) den Signalpegel des quantisiert rückgekoppelten Überlagerungssignals (qÜS) in Abhängigkeit von einem Signalpegel eines Überlgerungssignals (ÜS) verstärkt.

8. Empfänger nach einem der vorhergehenden Ansprüche,
   **dadurch gekennzeichnet**, daß die Phasenregelschleife (3) ein Schleifenfilter (31) zur Erzeugung eines Steuersignals (U) aus dem in dieser Phasenregelschleife (3) rückgeführten und mit dem quantisiert rückgekoppelten Überlagerungssignal (qÜS) überlagerten Überlagerungssignal (pqÜS) aufweist, wobei das Steuersignal (U) die Frequenz des Lokaloszillatorsignals (LS) steuert.

9. Empfänger nach einem der vorhergehenden Ansprüche,
   **dadurch gekennzeichnet**, daß die Rückkopplungsschleife (4) zur Erzeugung der quantisierten Rückkopplung eine Entscheidungseinrichtung (41) aufweist, die von einem aus dem Überlagerungssignal (ÜS) rückgewonnenen Takt (T) getaktet ist.

10. Empfänger nach Anspruch 9, **dadurch gekennzeichnet**, daß die Entscheidungseinrichtung (41) eine Entscheidungseinrichtung mit adaptiver quantisierter Rückkopplung ist, die von der Entscheidungseinrichtung (41) einen Gleichanteil eines Wechselstromüberlagerungssignals (ÜS) ergänzt.

11. Empfänger nach Anspruch 9 oder 10,
    **dadurch gekennzeichnet**, daß die Entscheidungseinrichtung (41) ein Flipflop (410) aufweist.

12. Empfänger nach einem der Ansprüche 9 bis 11,
    **dadurch gekennzeichnet**, daß die Entscheidungseinrichtung (41) durch eine zusätzliche Rückkopplungseinrichtung (6) zur Erzeugung einer quantisierten Rückkopplung eines Ausgangssignals (AS) der Entscheidungseinrichtung (41) zurück an einen Eingang (411) dieser Entscheidungsrichtung (41) aufweist.

13. Empfänger nach Anspruch 12, **dadurch gekennzeichnet,** daß in der zusätzlichen Rückkopplungseinrichtung (6) ein gegengekoppelter Operationsverstärker (61) angeordnet ist.

14. Empfänger nach einem der vorhergehenden Ansprüche,
    **dadurch gekennzeichnet**, daß in der Rückkopplungsschleife (4) zur Erzeugung der quantisierten Rückkopplung des Überlagerungssignals (ÜS) eine Schaltereinrichtung (7) zum wahlweisen Unterbrechen oder Herstellen dieser Rückkopplungsschleife (4) angeordnet ist.

15. Empfänger nach Anspruch 14, **dadurch gekennzeichnet,** daß die Schaltereinrichtung (7) von einem Einrastdetektor (8) gesteuert ist, der ein Einrasten der Phasenregelschleife (3) überwacht und die Schaltereinrichtung (7) zur Herstellung der Rückkopplungsschleife (4) zur Erzeugung der quantisierten Rückkopplung erst schließt, wenn das Einrasten der Phasenregelschleife (3) detektiert ist.

# FIG 1

# FIG 2

# FIG 3

FIG 4a

FIG 4b

$R_2 = \infty$

FIG 5a

FIG 5b